(19) **Europäisches Patentamt / European Patent Office / Office européen des brevets**

(11) **EP 4 582 475 A1**

(12) **EUROPEAN PATENT APPLICATION**
published in accordance with Art. 153(4) EPC

(43) Date of publication:
09.07.2025 Bulletin 2025/28

(21) Application number: 23877246.1

(22) Date of filing: 06.10.2023

(51) International Patent Classification (IPC):
$C08L\ 9/00^{(2006.01)}$     $B60C\ 1/00^{(2006.01)}$
$C08K\ 3/04^{(2006.01)}$     $C08L\ 9/06^{(2006.01)}$
$C08L\ 25/02^{(2006.01)}$     $C08L\ 57/02^{(2006.01)}$

(52) Cooperative Patent Classification (CPC):
B60C 1/00; C08K 3/04; C08L 9/00; C08L 9/06;
C08L 25/02; C08L 57/02; Y02T 10/86

(86) International application number:
PCT/JP2023/036567

(87) International publication number:
WO 2024/080242 (18.04.2024 Gazette 2024/16)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 14.10.2022 JP 2022165321

(71) Applicant: The Yokohama Rubber Co., Ltd.
Hiratsuka-shi, Kanagawa 254-8601 (JP)

(72) Inventor: HIJIKATA Kensuke
Hiratsuka-shi, Kanagawa 254-8601 (JP)

(74) Representative: Dilg, Haeusler, Schindelmann
Patentanwaltsgesellschaft mbH
Leonrodstraße 58
80636 München (DE)

(54) **TIRE RUBBER COMPOSITION**

(57) Provided is a rubber composition for a tire capable of enhancing a gripping force without impairing wear resistance and steering stability. Per 100 parts by mass of a diene rubber, from 3 parts by mass to 100 parts by mass of an aromatic hydrocarbon resin satisfying conditions of the following Formulas (1) and (2) is blended (in Formulas, Tg is a glass transition temperature (unit: °C), Mw is a weight average molecular weight, and Mn is a number average molecular weight).

$$Tg > 36 \times Mw/Mn + 22 \ldots (1)$$

$$Mw > 3000 \ldots (2)$$

Processed by Luminess, 75001 PARIS (FR)

**Description**

Technical Field

The present invention relates to a rubber composition for a tire intended mainly for use in a tread portion of a tire.

Background Art

In a rubber composition for a tire constituting a tread portion of a tire (particularly, a racing tire), a large amount of a high specific surface area filler or a high softening point resin is blended in order to improve a gripping force (see, for example, Patent Document 1). However, when a large amount of high specific surface area filler is blended, there is a concern that strength at break deteriorates, and accordingly, wear resistance thus deteriorates when used in a tire. In addition, when a large amount of the high softening point resin is blended, there is a concern that hardness may decrease, and accordingly, there is a concern that steering stability may decrease when used in a tire. Thus, measures for enhancing the gripping force without impairing the wear resistance and the steering stability are required.

Citation List

Patent Document

Patent Document 1: JP 5503159 B

Summary of Invention

Technical Problem

An object of the present invention is to provide a rubber composition for a tire capable of enhancing a gripping force without impairing wear resistance and steering stability.

Solution to Problem

A rubber composition for a tire of the present invention that achieves the above-described object is characterized by including, per 100 parts by mass of a diene rubber, from 3 parts by mass to 100 parts by mass of an aromatic hydrocarbon resin satisfying conditions of the following Formulas (1) and (2):

$$Tg > 36 \times Mw/Mn + 22 \dots (1)$$

$$Mw > 3000 \dots (2)$$

(where Tg is a glass transition temperature [unit: °C], Mw is a weight average molecular weight, and Mn is a number average molecular weight).

Advantageous Effects of Invention

Since the rubber composition for a tire of the present invention uses the aromatic hydrocarbon resin satisfying the conditions specified by Formulas (1) and (2), a gripping force can be enhanced while suppressing deterioration of wear resistance and steering stability associated with the blending of the resin.

In the present invention, carbon black having a nitrogen adsorption specific surface area $N_2SA$ of from 100 m$^2$/g to 500 m$^2$/g is preferably blended in an amount from 50 parts by mass to 200 parts by mass per 100 parts by mass of the diene rubber. As a result, it is possible to further enhance the effect of improving the gripping force while maintaining good wear resistance and steering stability.

In the present invention, the diene rubber preferably contains a styrene-butadiene rubber having a styrene content of less than 35 mass%. By using the styrene-butadiene rubber having a low styrene content as described above, compatibility with the aromatic hydrocarbon resin can be adjusted to bring changes to dynamic visco-elasticity, which is advantageous for improving the gripping force.

In the present invention, a liquid aromatic vinyl-conjugated diene rubber having a glass transition temperature of -40°C or higher is preferably contained. As a result, it is possible to further enhance the effect of improving the gripping force while maintaining good wear resistance and steering stability.

Description of Embodiments

In the rubber composition for a tire of the present invention, the rubber component is diene rubber. As the diene rubber, a type generally used for the rubber composition for a tire (in particular, a rubber composition constituting a tread portion of a racing tire) can be used. In the present invention, styrene-butadiene rubber is particularly preferably contained as the diene rubber. When the diene rubber contains the styrene-butadiene rubber, the blended amount is preferably from 60 mass% to 100 mass%, and more preferably from 80 mass% to 100 mass%, in 100 mass% of the diene rubber. By containing the styrene-butadiene rubber, both steering stability and grip performance can be provided in a compatible manner. Other diene rubbers can be blended together with the styrene-butadiene rubber. As other diene rubbers, a rubber that is generally used in a rubber composition for a tire such as natural rubber, isoprene rubber, and butadiene rubber can be used. These other diene rubbers may be used alone or as a discretionary blend.

When the styrene-butadiene rubber is used as the diene rubber, the styrene content is preferably less than 35 mass%, and more preferably from 15 mass% to 30 mass%. By using the styrene-butadiene rubber having a styrene content of less than 35 mass% as described above, compatibility with the aromatic hydrocarbon resin can be adjusted to bring changes to the behavior of dynamic visco-elasticity of the rubber composition, which is advantageous for improving a gripping force. When the styrene content of the styrene-butadiene rubber is 35 mass% or more, the gripping force may be reduced. In the present invention, the styrene content in the styrene-butadiene rubber can be measured in accordance with JIS K6239 "Raw material rubber-Determination of microstructure of solution-polymerized SBR".

In the rubber composition for a tire of the present invention, an aromatic hydrocarbon resin satisfying the conditions of the following Formulas (1) and (2) is necessarily blended. By blending such an aromatic hydrocarbon resin, the gripping force can be effectively enhanced.

$$Tg > 36 \times Mw/Mn + 22 \dots (1)$$

$$Mw > 3000 \dots (2)$$

(where Tg is a glass transition temperature [unit: °C], Mw is a weight average molecular weight, and Mn is a number average molecular weight).

In the present specification, the glass transition temperature Tg can be determined as a temperature at the midpoint of a transition region observed in a thermogram measured by differential scanning calorimetry (DSC) at a temperature increase rate of 20°C/minute. The weight average molecular weight Mw and the number average molecular weight Mn can be measured as molecular weights by gel permeation chromatography (GPC) calibrated with polystyrene under the following conditions.

    Measuring apparatus: GPC (ALC/GPC 150C) available from Waters Corporation
    Column: Three columns of AD806M/S available from Showa Denko K.K.
    Mobile phase type: Ortho-dichlorobenzene (ODCB)
    Flow rate of mobile phase: 1.0 mL/minute
    Measurement temperature: 140°C
    Detector type: MIRAN 1A IR detector (measurement wavelength: 3.42 $\mu$m) available from The Foxboro Co.

When Formula (1) is not satisfied, that is, when the relationship $Tg \leq 36 \times Mw/Mn + 22$ is satisfied, $\tan\delta$ at high temperature cannot be improved, and the gripping force cannot be enhanced. When Formula (2) is not satisfied, that is, when the relationship $Mw \leq 3000$ is satisfied, the compatibility with the diene rubber described above increases, which causes the action of affecting dynamic visco-elasticity of the rubber composition to decrease, so that the gripping force cannot be enhanced. In addition, a desired effect cannot be obtained only by satisfying one of Formulas (1) or (2).

The blended amount of the aromatic hydrocarbon resin satisfying the conditions of Formulas (1) and (2) is from 3 parts by mass to 100 parts by mass, preferably from 10 parts by mass to 85 parts by mass, and more preferably from 15 parts by mass to 70 parts by mass, per 100 parts by mass of the diene rubber. When the blended amount of the aromatic hydrocarbon resin is less than 3 parts by mass, the effect of improving the gripping force cannot be sufficiently obtained. When the blended amount of the aromatic hydrocarbon resin is more than 100 parts by mass, the operability and the strength at break are deteriorated. A plurality of aromatic hydrocarbon resins satisfying the conditions of Formulas (1) and (2) may be used in combination. When the plurality of aromatic hydrocarbon resins are used in combination, it is preferable that a total of the blended amounts satisfies the aforementioned range.

The aromatic hydrocarbon resin satisfying the conditions of Formulas (1) and (2) can be used in combination with another resin not satisfying the conditions of Formulas (1) and/or (2). As another resin, a type generally used for the rubber composition for a tire can be used. When the aromatic hydrocarbon resin satisfying the conditions of Formulas (1) and (2) is used in combination with another resin, the blended amount of the aromatic hydrocarbon resin satisfying the conditions of Formulas (1) and (2) is preferably from 5 parts by mass to 90 parts by mass, and more preferably from 10 parts by mass to 80 parts by mass per 100 parts by mass of the diene rubber. On the other hand, the blended amount of another resin is preferably from 5 parts by mass to 90 parts by mass, and more preferably 10 parts by mass to 80 parts by mass per 100 parts by mass of the diene rubber. However, the total of the blended amounts of these resins is preferably from 10 parts by mass to 150 parts by mass, and more preferably from 20 parts by mass to 120 parts by mass per 100 parts by mass of the diene rubber.

The value of the glass transition temperature Tg of the aromatic hydrocarbon resin is not particularly limited as long as Formula (1) is satisfied, and is preferably from 30°C to 130°C, and more preferably from 50°C to 120°C. The value of the weight average molecular weight Mw of the aromatic hydrocarbon resin is not particularly limited as long as the value satisfies Formula (2), and the value is preferably from 3000 to 18000 and more preferably from 5000 to 15000. In addition, the ratio Mw/Mn of the weight average molecular weight Mw to the number average molecular weight Mn is not particularly limited, and can be set in a range of from 0.5 to 3.0, for example.

The aromatic hydrocarbon resin is not particularly limited as long as it satisfies Formulas (1) and (2), and a petroleum resin composed of a C9 component (aromatic component), for example, a C9 petroleum resin (aromatic petroleum resin obtained by polymerizing fractions such as $\alpha$-methylstyrene, o-vinyltoluene, m-vinyltoluene, and p-vinyltoluene) is preferable. Among them, a C9 petroleum resin containing $\alpha$-methylstyrene as a main component is preferable. The resin composed of $\alpha$-methylstyrene thus purified can increase the weight average molecular weight Mw and the glass transition temperature Tg.

Carbon black is preferably blended in the rubber composition for a tire of the present invention. As the carbon black, carbon black having a nitrogen adsorption specific surface area $N_2SA$ of preferably from 100 m$^2$/g to 500 m$^2$/g, more preferably from 130 m$^2$/g to 450 m$^2$/g can be suitably used. By blending such carbon black, the gripping force can be improved while maintaining the steering stability and wear resistance. When the nitrogen adsorption specific surface area $N_2SA$ of carbon black is less than 100 m$^2$/g, the steering stability, the wear resistance, and the gripping force may be deteriorated. If the nitrogen adsorption specific surface area $N_2SA$ of carbon black is more than 500 m$^2$/g, the wear resistance may deteriorate. In the present invention, the nitrogen adsorption specific surface area $N_2SA$ of the carbon black is determined in accordance with JIS K6217-2.

When the carbon black is blended, the blended amount thereof is preferably from 50 parts by mass to 200 parts by mass, and more preferably from 80 parts by mass to 180 parts by mass per 100 parts by mass of the diene rubber. When the blended amount of the carbon black is less than 50 parts by mass, the steering stability, the wear resistance, and the gripping force may deteriorate. When the blended amount of the carbon black is more than 200 parts by mass, the wear resistance may deteriorate.

In the rubber composition for a tire of the present invention, other fillers may be blended in addition to the carbon black described above. Examples of other fillers include silica, calcium carbonate, magnesium carbonate, talc, clay, alumina, aluminum hydroxide, titanium oxide, and calcium sulfate. One of these may be used, or two or more may be used in combination.

The rubber composition for a tire of the present invention can contain a liquid polymer as a plasticizer component. In particular, it is preferable to use a liquid polymer described later instead of the oil generally used as the plasticizer component in the rubber composition for a tire. Specifically, as the liquid polymer, a liquid aromatic vinyl-conjugated diene rubber having a glass transition temperature of preferably -40°C or higher, more preferably from -30°C to -5°C may be used. By blending the plasticizer component in this manner, the wear resistance and the grip performance can be improved. When the glass transition temperature of the liquid polymer is lower than -40°C, the gripping force may be lowered. When the liquid polymer is blended, the blended amount thereof is preferably from 10 parts by mass to 50 parts by mass, and more preferably from 15 parts by mass to 45 parts by mass, per 100 parts by mass of the diene rubber. When the blended amount of the liquid polymer is less than 10 parts by mass, there is a possibility that an additional effect (further improvement of wear resistance and gripping force) obtained by using the liquid polymer cannot be sufficiently expected. When the blended amount of the liquid polymer is more than 50 parts by mass, the wear resistance may deteriorate.

In addition to the components described above, the rubber composition for a tire may also contain various compounding agents that are commonly used in a rubber composition for a tire, in accordance with an ordinary method. Examples of the compounding agents include a vulcanization or crosslinking agent, a vulcanization accelerator, an anti-aging agent, a processing aid, and a thermosetting resin. These compounding agents can be kneaded by a common method to obtain a rubber composition that can then be used for vulcanization or crosslinking. These compounding agents can be blended in an amount commonly used in the related art so long as the object of the present invention is not hindered. The rubber composition for a tire can be prepared by mixing the above-mentioned components using a known rubber kneading machine such as a Banbury mixer, a kneader, or a roller.

The rubber composition for a tire of the present invention is suitable for forming a tread portion of a tire for a passenger vehicle or a racing tire. The tire thus obtained can improve the gripping force while favorably exhibiting the wear resistance and the steering stability. The tire to which the rubber composition for a tire of the present invention is used is preferably a pneumatic tire (a tire inflated with the air, an inert gas such as nitrogen, or another gas in its inner portion) but may also be a non-pneumatic tire. Also in the case of a non-pneumatic tire, the rubber composition for a tire of the present invention is preferably used for a portion (tread portion in a pneumatic tire) that abuts against a road surface.

The present invention will further be described below by way of Examples, but the scope of the present invention is not limited to the Examples.

Example

For preparation of 17 types of rubber compositions for a tire (Standard Examples 1 to 2, Comparative Examples 1-1 to 3 and 2-1 to 2-4, and Examples 1-1 to 12 and 2-1 to 2-13) having formulations listed in Tables 1 to 2, blending components other than a vulcanization accelerator and sulfur were weighed and kneaded in a 1.8 L sealed Banbury mixer for 5 minutes, and the resultant master batch was then discharged and cooled at room temperature. Thereafter, the master batch was added into the 1.8 L sealed Banbury mixer, and the vulcanization accelerator and sulfur were added and mixed for 2 minutes. Thus, each of the rubber compositions for a tires was obtained.

In Table 3, in resins 1 to 6 used in each example, the glass transition temperature Tg (unit: °C), the right side (36 × Mw/Mn + 22) of Formula (1), and the weight average molecular weight Mw are collectively presented. When the value presented in the row of the glass transition temperature Tg (unit: °C) exceeds the value presented in the row of the right side of Formula (1), it means that Formula (1) is satisfied. When the value listed in the row of the weight average molecular weight Mw is more than 3000, it means that Formula (2) is satisfied.

Using the obtained rubber composition, a vulcanized rubber sheet was prepared by vulcanization at 160°C for 20 minutes in a mold of 15 cm × 15 cm × 0.2 cm, and tanδ at 100°C, hardness at 100°C, and strength at break at 100°C were measured by the following methods, and used as indices of grip performance, steering stability, and wear resistance.

Grip performance (tanδ at 100°C)

Using a viscoelastic spectrometer, available from Toyo Seiki Seisaku-sho, Ltd., dynamic visco-elasticity of the vulcanized rubber sheet obtained was measured at an initial strain of 10%, an amplitude of ±2%, and a frequency of 20 Hz, and the tanδ at 100°C was determined. The obtained results are presented on the "Grip performance" rows of Tables 1 to 2 as index values, with a value of Standard Example 1 being 100 for Table 1 and with a value of Standard Example 2 being 100 for Table 2. The larger the index value, the higher the tanδ at 100°C, which means that the grip performance (in particular, grip performance on dry road surfaces) when the tire is formed is excellent.

Steering stability (hardness at 100°C)

The hardness of the obtained vulcanized rubber sheet was measured at a temperature of 100°C with a type A durometer in accordance with JIS K 6253. The obtained results are presented on the "Steering stability" rows of Tables 1 to 2 as index values, with a value of Standard Example 1 being 100 for Table 1 and with a value of Standard Example 2 being 100 for Table 2. The larger the index value, the higher the hardness at 100°C, which means that the steering stability is excellent when a tire is formed.

Wear resistance (strength at break at 100°C)

Using the obtained vulcanized rubber sheet, a JIS No. 3 dumbbell test piece was cut out in accordance with JIS K 6251, and tensile strength at break at 100°C was measured in accordance with JIS K 6251. The obtained results are presented on the "Wear resistance" rows of Tables 1 to 2 as index values, with a value of Standard Example 1 being 100 for Table 1 and with a value of Standard Example 2 being 100 for Table 2. The larger the index value, the higher the strength at break at 100°C, which means that the wear resistance is excellent when a tire is formed.

EP 4 582 475 A1

[Table 1]

| | | Standard Example 1 | Comparative Example 1-1 | Comparative Example 1-2 | Comparative Example 1-3 | Example 1-1 | Example 1-2 | Example 1-3 | Example 1-4 | Example 1-5 | Example 1-6 | Example 1-7 | Example 1-8 | Example 1-9 | Example 1-10 |
|---|---|---|---|---|---|---|---|---|---|---|---|---|---|---|---|
| SBR-1 | Parts by mass | 137.5 | 137.5 | 137.5 | 137.5 | 137.5 | 137.5 | 137.5 | | | 137.5 | 137.5 | 137.5 | | |
| SBR-2 | Parts by mass | | | | | | | | 137.5 | 137.5 | | | | 137.5 | 137.5 |
| CB-1 | Parts by mass | 100 | 100 | 100 | 100 | 100 | 100 | | 100 | 100 | 100 | 100 | | 100 | 100 |
| CB-2 | Parts by mass | | | | | | | 100 | | | | | 100 | | |
| Resin-1 | Parts by mass | 30 | | | | | | | | | | | | | |
| Resin-2 | Parts by mass | | 30 | | | | | | | | | | | | |
| Resin-3 | Parts by mass | | | 30 | | | | | | | | | | | |
| Resin-4 | Parts by mass | | | | 30 | | | | | | | | | | |
| Resin-5 | Parts by mass | | | | | 30 | 60 | 30 | 30 | 30 | | | | | |
| Resin-6 | Parts by mass | | | | | | | | | | 30 | 60 | 30 | 30 | 30 |

(continued)

| | | Standard Example 1 | Comparative Example 1-1 | Comparative Example 1-2 | Comparative Example 1-3 | Example 1-1 | Example 1-2 | Example 1-3 | Example 1-4 | Example 1-5 | Example 1-6 | Example 1-7 | Example 1-8 | Example 1-9 | Example 1-10 |
|---|---|---|---|---|---|---|---|---|---|---|---|---|---|---|---|
| Liquid polymer | Parts by mass | | | | | | | | | 30 | | | | | 30 |
| Oil | Parts by mass | 30 | 30 | 30 | 30 | 30 | 30 | 30 | 30 | | | 30 | 30 | 30 | |
| Stearic acid | Parts by mass | 2 | 2 | 2 | 2 | 2 | 2 | 2 | 2 | 2 | 2 | 2 | 2 | 2 | 2 |
| Zinc oxide | Parts by mass | 2 | 2 | 2 | 2 | 2 | 2 | 2 | 2 | 2 | 2 | 2 | 2 | 2 | 2 |
| Anti-aging agent | Parts by mass | 2 | 2 | 2 | 2 | 2 | 2 | 2 | 2 | 2 | 2 | 2 | 2 | 2 | 2 |
| Vulcanization accelerator | Parts by mass | 2 | 2 | 2 | 2 | 2 | 2 | 2 | 2 | 2 | 2 | 2 | 2 | 2 | 2 |
| Sulfur | Parts by mass | 1.5 | 1.5 | 1.5 | 1.5 | 1.5 | 1.5 | 1.5 | 1.5 | 1.5 | 1.5 | 1.5 | 1.5 | 1.5 | 1.5 |
| Grip performance | Index value | 100 | 108 | 107 | 110 | 114 | 134 | 118 | 120 | 124 | 120 | 143 | 125 | 128 | 133 |
| Steering stability | Index value | 100 | 105 | 98 | 99 | 106 | 103 | 111 | 109 | 113 | 108 | 104 | 113 | 109 | 115 |
| Wear resistance | Index value | 100 | 98 | 101 | 105 | 109 | 105 | 113 | 110 | 115 | 114 | 108 | 119 | 115 | 114 |

7

[Table 2]

| | | Standard Example 2 | Comparative Example 2-1 | Comparative Example 2-2 | Comparative Example 2-3 | Example 2-1 | Example 2-2 | Example 2-3 | Example 2-4 | Example 2-5 | Comparative Example 2-4 | Example 2-6 | Example 2-7 | Example 2-8 | Example 2-9 | Example 2-10 | Example 2-11 | Example 2-12 | Example 2-13 |
|---|---|---|---|---|---|---|---|---|---|---|---|---|---|---|---|---|---|---|---|
| SBR-1 | Parts by mass | 137.5 | 137.5 | 137.5 | 137.5 | 137.5 | 137.5 | | | 137.5 | 137.5 | 137.5 | 137.5 | 137.5 | 137.5 | | | 137.5 | 137.5 |
| SBR-2 | Parts by mass | | | | | | | 137.5 | 137.5 | | | | | | | 137.5 | 137.5 | | |
| CB-1 | Parts by mass | 100 | 100 | 100 | 100 | 100 | | 100 | 100 | 100 | 100 | 100 | 100 | 100 | | 100 | 100 | 100 | 100 |
| CB-2 | Parts by mass | | | | | | 100 | | | | | | | | 100 | | | | |
| Resin-1 | Parts by mass | 80 | | | | | | | | | | 30 | 60 | | | | | | |
| Resin-2 | Parts by mass | | 80 | | | | | | | | | | | | | | | | |
| Resin-3 | Parts by mass | | | 80 | | | | | | | | | | | | | | | |
| Resin-4 | Parts by mass | | | | 80 | | | | | | | | | | | | | | |
| Resin-5 | Parts by mass | | | | | 80 | 80 | 80 | 80 | 100 | 120 | 50 | 60 | | | | | 40 | 30 |

8

| | | Standard Example 2 | Comparative Example 2-1 | Comparative Example 2-2 | Comparative Example 2-3 | Example 2-1 | Example 2-2 | Example 2-3 | Example 2-4 | Example 2-5 | Comparative Example 2-4 | Example 2-6 | Example 2-7 | Example 2-8 | Example 2-9 | Example 2-10 | Example 2-11 | Example 2-12 | Example 2-13 |
|---|---|---|---|---|---|---|---|---|---|---|---|---|---|---|---|---|---|---|---|
| Resin-6 | Parts by mass | | | | | | | | | | | | | 80 | 80 | 80 | 80 | 40 | 50 |
| Liquid polymer | Parts by mass | | | | | | | | 30 | | | | | | | | | 30 | |
| Oil | Parts by mass | 30 | 30 | 30 | 30 | 30 | 30 | 30 | | 30 | 30 | 30 | 30 | | 30 | 30 | | 30 | 30 |
| Stearic acid | Parts by mass | 2 | 2 | 2 | 2 | 2 | 2 | 2 | 2 | 2 | 2 | 2 | 2 | 2 | 2 | 2 | 2 | 2 | 2 |
| Zinc oxide | Parts by mass | 2 | 2 | 2 | 2 | 2 | 2 | 2 | 2 | 2 | 2 | 2 | 2 | 2 | 2 | 2 | 2 | 2 | 2 |
| Anti-aging agent | Parts by mass | 2 | 2 | 2 | 2 | 2 | 2 | 2 | 2 | 2 | 2 | 2 | 2 | 2 | 2 | 2 | 2 | 2 | 2 |
| Vulcanization accelerator | Parts by mass | 2 | 2 | 2 | 2 | 2 | 2 | 2 | 2 | 2 | 2 | 2 | 2 | 2 | 2 | 2 | 2 | 2 | 2 |
| Sulfur | Parts by mass | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Grip performance | Index value | 100 | 120 | 118 | 122 | 135 | 155 | 159 | 165 | 170 | 173 | 125 | 158 | 151 | 157 | 178 | 185 | 121 | 126 |
| Steering stability | Index value | 100 | 113 | 97 | 98 | 120 | 132 | 130 | 140 | 102 | 94 | 110 | 101 | 125 | 134 | 145 | 156 | 110 | 114 |
| Wear resistance | Index value | 100 | 95 | 104 | 107 | 128 | 140 | 138 | 143 | 116 | 97 | 117 | 105 | 141 | 145 | 150 | 155 | 115 | 121 |

EP 4 582 475 A1

Types of raw materials used as indicated in Tables 1 to 2 are described below.

- SBR-1: Styrene-butadiene rubber, Nipol 1739 (styrene content: 40 mass%), available from ZEON CORPORATION.
- SBR-2: Styrene-butadiene rubber, Nipol 1723 (styrene content: 23.5 mass%), available from ZEON CORPORATION.
- CB-1: Carbon black, Show Black N339 (nitrogen adsorption specific surface area $N_2SA$ = 94 $m^2/g$), available from Cabot Corporation.
- CB-2: Carbon black, SEAST 9 (nitrogen adsorption specific surface area $N_2SA$ = 142 $m^2/g$), available from Tokai Carbon Co., Ltd.
- Resin-1: Aromatic hydrocarbon resin, Neopolymer 140S, available from JX Energy Corporation
- Resin-2: Aromatic hydrocarbon resin, Neopolymer 170S, available from JX Energy Corporation
- Resin-3: Aromatic hydrocarbon resin, SYLVARES SA140, available from Kraton Corporation
- Resin-4: Aromatic hydrocarbon resin, Endex155, available from Hercules Incorporated
- Resin-5: Aromatic hydrocarbon resin, Sylvatraxx4412, available from Kraton Corporation
- Resin-6: Aromatic hydrocarbon resin, Endex 160, available from Eastman Chemical Company
- Liquid polymer: Low molecular weight styrene-butadiene copolymer, RICON 100, available from Cray Valley
- Oil: Extract No. 4S, available from Showa Shell Sekiyu KK
- Stearic acid: Beads stearic acid YR, available from NOF Corporation
- Zinc oxide: Zinc Oxide III, available from Seido Chemical Industry Co., Ltd.
- Anti-aging agent: 6PPD, available from Flexsys
- Vulcanization accelerator: NOCCELER CZ-G, available from Ouchi Shinko Chemical Industrial Co., Ltd.
- Sulfur: Golden Flower oil treated sulfur powder, available from Tsurumi Chemical Industry Co., Ltd.

[Table 3]

|  | Tg (°C) | Right side of Formula (1) 36 × Mw/Mn + 22 | Mw |
|---|---|---|---|
| Resin-1 | 92 | 94 | 2149 |
| Resin-2 | 105 | 83 | 2161 |
| Resin-3 | 89 | 107 | 4190 |
| Resin-4 | 107 | 112 | 7978 |
| Resin-5 | 91 | 85 | 3797 |
| Resin-6 | 114 | 107 | 11644 |

As is apparent from Table 1, in Examples 1-1 to 1-10, the grip performance, the steering stability, and the wear resistance were improved as compared with Standard Example 1. As is apparent from Table 2, in Examples 2-1 to 2-13, the grip performance, the steering stability, and the wear resistance were improved as compared with Standard Example 2.

On the other hand, in Comparative Example 1-1, since a resin not satisfying Formula (2) was used, the wear resistance deteriorated. In Comparative Example 1-2, since a resin not satisfying Formula (1) was used, the steering stability deteriorated. In Comparative Example 1-3, since a resin not satisfying Formula (1) was used, the steering stability deteriorated. In Comparative Example 2-1, since a resin not satisfying Formula (2) was used, the wear resistance deteriorated. In Comparative Example 2-2, since a resin not satisfying Formula (1) was used, the steering stability deteriorated. In Comparative Example 2-3, since a resin not satisfying Formula (1) was used, the steering stability deteriorated. In Comparative Example 2-4, a resin satisfying Formulas (1) and (2) was used; however, since the blended amount of the resin was large, the steering stability and the wear resistance were deteriorated.

The present disclosure includes the following embodiments of the invention.

Invention [1] A rubber composition for a tire including, per 100 parts by mass of a diene rubber, from 3 parts by mass to 100 parts by mass of an aromatic hydrocarbon resin satisfying conditions of Formulas (1) and (2) set forth below:

$$Tg > 36 \times Mw/Mn + 22 \dots (1)$$

$$Mw > 3000 \dots (2)$$

where Tg is a glass transition temperature [unit: °C], Mw is a weight average molecular weight, and Mn is a number average molecular weight.

Invention [2] The rubber composition for a tire according to Invention [1], wherein, per 100 parts by mass of the diene rubber, from 50 parts by mass to 200 parts by mass of carbon black having a nitrogen adsorption specific surface area $N_2SA$ of from 100 m$^2$/g to 500 m$^2$/g is blended .

Invention [3] The rubber composition for a tire according to Invention [1] or [2], wherein the diene rubber includes a styrene-butadiene rubber having a styrene content of less than 35 mass%.

Invention [4] The rubber composition for a tire according to any one of Inventions [1] to [3], including a liquid aromatic vinyl-conjugated diene rubber having a glass transition temperature of -40°C or higher.

**Claims**

1. A rubber composition for a tire comprising, per 100 parts by mass of a diene rubber, from 3 parts by mass to 100 parts by mass of an aromatic hydrocarbon resin satisfying conditions of Formulas (1) and (2) set forth below:

$$Tg > 36 \times Mw/Mn + 22 \ldots (1)$$

$$Mw > 3000 \ldots (2)$$

where Tg is a glass transition temperature (unit: °C), Mw is a weight average molecular weight, and Mn is a number average molecular weight.

2. The rubber composition for a tire according to claim 1, wherein, per 100 parts by mass of the diene rubber, from 50 parts by mass to 200 parts by mass of carbon black having a nitrogen adsorption specific surface area $N_2SA$ of from 100 m$^2$/g to 500 m$^2$/g is blended.

3. The rubber composition for a tire according to claim 1 or 2, wherein the diene rubber comprises a styrene-butadiene rubber having a styrene content of less than 35 mass%.

4. The rubber composition for a tire according to any one of claims 1 to 3, comprising a liquid aromatic vinyl-conjugated diene rubber having a glass transition temperature of -40°C or higher.

## INTERNATIONAL SEARCH REPORT

| International application No. |
|---|
| **PCT/JP2023/036567** |

**A. CLASSIFICATION OF SUBJECT MATTER**

***C08L 9/00***(2006.01)i; ***B60C 1/00***(2006.01)i; ***C08K 3/04***(2006.01)i; ***C08L 9/06***(2006.01)i; ***C08L 25/02***(2006.01)i;
***C08L 57/02***(2006.01)i

FI:    C08L9/00; C08K3/04; C08L9/06; C08L57/02; C08L25/02; B60C1/00 A

According to International Patent Classification (IPC) or to both national classification and IPC

**B. FIELDS SEARCHED**

Minimum documentation searched (classification system followed by classification symbols)

C08L1/00-101/14; C08K3/00-13/08; B60C1/00-19/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2010-270298 A (BRIDGESTONE CORP) 02 December 2010 (2010-12-02) claims 1-2, 4, paragraphs [0007], [0026], [0029]-[0032], [0039], [0052]-[0053], [0056], [0058], tables 1, 4, example 1 | 1-3 |
| Y | | 4 |
| X | JP 11-049894 A (YOKOHAMA RUBBER CO LTD) 23 February 1999 (1999-02-23) comparative example 3, tables 1-2, paragraphs [0001], [0019]-[0023] | 1-3 |
| A | | 4 |
| Y | WO 2016/104144 A1 (SUMITOMO RUBBER INDUSTRIES, LTD.) 30 June 2016 (2016-06-30) claim 1, paragraphs [0013], [0104], [0107]-[0108], [0130], [0146] | 4 |
| A | | 1-3 |
| A | WO 2018/198775 A1 (SUMITOMO RUBBER INDUSTRIES, LTD.) 01 November 2018 (2018-11-01) entire text | 1-4 |

☑ Further documents are listed in the continuation of Box C.      ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 December 2023** | **19 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2023/036567** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2017-132984 A (THE GOODYEAR TIRE & RUBBER COMPANY) 03 August 2017 (2017-08-03)<br>entire text | 1-4 |
| A | JP 2020-507650 A (COOPER TIRE & RUBBER COMPANY) 12 March 2020 (2020-03-12)<br>entire text | 1-4 |
| A | JP 2022-142764 A (THE GOODYEAR TIRE & RUBBER COMPANY) 30 September 2022 (2022-09-30)<br>entire text | 1-4 |

Form PCT/ISA/210 (second sheet) (January 2015)

## INTERNATIONAL SEARCH REPORT
### Information on patent family members

International application No.

**PCT/JP2023/036567**

| Patent document cited in search report | | | Publication date (day/month/year) | Patent family member(s) | | | Publication date (day/month/year) |
|---|---|---|---|---|---|---|---|
| JP | 2010-270298 | A | 02 December 2010 | (Family: none) | | | |
| JP | 11-049894 | A | 23 February 1999 | (Family: none) | | | |
| WO | 2016/104144 | A1 | 30 June 2016 | US | 2017/0341468 | A1 | |
| | | | | claim 1, paragraphs [0014], [0133]-[0142], [0205], [0224] | | | |
| | | | | EP | 3228658 | A1 | |
| | | | | CN | 107001712 | A | |
| WO | 2018/198775 | A1 | 01 November 2018 | US | 2020/0148861 | A1 | |
| | | | | entire text | | | |
| | | | | EP | 3617263 | A1 | |
| | | | | CN | 110573567 | A | |
| JP | 2017-132984 | A | 03 August 2017 | US | 2017/0145195 | A1 | |
| | | | | entire text | | | |
| | | | | EP | 3170680 | A1 | |
| | | | | KR | 10-2017-0059406 | A | |
| | | | | CN | 106905575 | A | |
| | | | | RU | 2016145062 | A | |
| | | | | CA | 2947703 | A1 | |
| JP | 2020-507650 | A | 12 March 2020 | US | 2018/0229553 | A1 | |
| | | | | entire text | | | |
| | | | | WO | 2018/148728 | A1 | |
| | | | | EP | 3580071 | A1 | |
| | | | | CA | 3052477 | A1 | |
| | | | | KR | 10-2019-0119086 | A | |
| | | | | CN | 110799352 | A | |
| | | | | MX | 2019009455 | A | |
| JP | 2022-142764 | A | 30 September 2022 | US | 2022/0298333 | A1 | |
| | | | | entire text | | | |
| | | | | EP | 4083131 | A1 | |
| | | | | CN | 115073831 | A | |

Form PCT/ISA/210 (patent family annex) (January 2015)

**EP 4 582 475 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5503159 B